# EUROPEAN PATENT APPLICATION

(11) **EP 4 730 484 A1**
(43) Date of publication of application: **22.04.2026**
(21) Application number: 25198374.8
(22) Date of filing: 27.08.2025
(51) Int. Cl.: H01M 10/613, H01M 10/625, H01M 50/209, H01M 10/6556, H01M 10/6557

(54) **POWER STORAGE DEVICE**

(30) Priority: 15.10.2024 JP 2024180333
(71) Applicant: TOYOTA JIDOSHA KABUSHIKI KAISHA, Toyota-shi, Aichi-ken 471-8571 (JP)
(72) Inventor: YAMASHITA, Osamu, Toyota-shi, Aichi-ken, 471-8571 (JP); MORI, Shinichiro, Toyota-shi, Aichi-ken, 471-8571 (JP); SHIMIZU, Koji, Toyota-shi, Aichi-ken, 471-8571 (JP); FUJISHIMA, Seigo, Toyota-shi, Aichi-ken, 471-8571 (JP); KITO, Sumiko, Toyota-shi, Aichi-ken, 471-8571 (JP); ISHIKAWA, Shinya, Toyota-shi, Aichi-ken, 471-8571 (JP); TOMITA, Shintaro, Toyota-shi, Aichi-ken, 471-8571 (JP); YAMASHITA, Yuji, Toyota-shi, Aichi-ken, 471-8571 (JP); KIMURA, Kenta, Toyota-shi, Aichi-ken,, 471-8571 (JP)
(74) Representative: TBK

(57) **Abstract**

A power storage device includes: an accommodation case (10) that accommodates a power storage cell (29); a heat exchanger (30) disposed in the accommodation case (10); and a coolant pipe (31) through which a coolant flows, the coolant pipe (31) being disposed in the accommodation case (10), the coolant pipe (31) being connected to the heat exchanger (30), wherein the coolant pipe (31) includes a first portion and a second portion (43) that cools surrounding air more greatly than the first portion.

## Description

### CROSS REFERENCE TO RELATED APPLICATIONS

This nonprovisional application is based on Japanese Patent Application No. 2024-180333 filed on October 15, 2024 with the Japan Patent Office, the entire contents of which are hereby incorporated by reference.

### BACKGROUND

### Field

The present disclosure relates to a power storage device.

### Description of the Background Art

Conventionally, various power storage devices have been proposed. For example, a power storage device described in Japanese Patent Laying-Open No. 2021-12864 includes: a housing; a battery cell assembly disposed in the housing and including a plurality of battery cells; and a coolant system. The cooling system includes a cooling plate and a connection pipe.

### SUMMARY

In the above-described power storage device, dew condensation water is generated in the housing due to driving of the cooling system. On this occasion, the dew condensation water is also adhered to a surface of a battery cell, which may adversely affect the battery cell or the like.

The present disclosure has been made in view of the above-described problem, and has an object to provide a power storage device in which a cooling system or the like is mounted, so as to suppress dew condensation of dew condensation water on a power storage cell or the like in a case.

A power storage device according to the present disclosure includes: an accommodation case that accommodates a power storage cell; a heat exchanger disposed in the accommodation case; and a coolant pipe through which a coolant flows, the coolant pipe being disposed in the accommodation case, the coolant pipe being connected to the heat exchanger, wherein the coolant pipe includes a first portion and a second portion that cools surrounding air more greatly than the first portion.

The coolant pipe includes a supply pipe through which the coolant to be supplied to the heat exchanger flows, and a discharge pipe through which the coolant to be discharged from the heat exchanger flows, and the second portion is provided at the supply pipe.

A heat insulating member is disposed on an outer surface of the first portion, and an outer surface of the second portion is exposed in the accommodation case.

The accommodation case includes a bottom plate and a wall portion formed to extend upward from the bottom plate, the wall portion includes a base portion and a wall main body formed to extend upward from the base portion, the base portion is formed to protrude to the power storage cell side with respect to the wall main body, the coolant pipe is disposed above the base portion, and in the base portion, an opening is formed at a portion located below the coolant pipe.

The accommodation case includes a partition wall disposed on the power storage cell side with respect to the wall portion, and the second portion is disposed between the partition wall and the wall portion. A hollow portion is formed in the wall portion, and the opening is formed to communicate with the hollow portion.

The power storage device further includes a shear panel disposed on a lower surface of the accommodation case, wherein a discharge port communicating with the hollow portion is formed in a lower surface of the wall portion, and the discharge port is closed by the shear panel.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a diagram schematically showing a vehicle 1 on which a power storage device 2 is mounted.
Fig. 2 is an exploded perspective view showing a power storage device 2.
Fig. 3 is a perspective view showing a power storage cell 29.
Fig. 4 is a plan view showing a cooling device 12 and the like.
Fig. 5 is a perspective view showing cooling device 12.
Fig. 6 is a cross sectional view showing a heat exchange plate 32.
Fig. 7 is a cross sectional view along a line VII-VII in Fig. 4.
Fig. 8 is a cross sectional view along a line VIII-VIII in Fig. 4.
Fig. 9 is a cross sectional view showing a power storage device 2A.
Fig. 10 is a cross sectional view showing a power storage device 2B.

### DESCRIPTION OF THE PREFERRED EMBODIMENTS

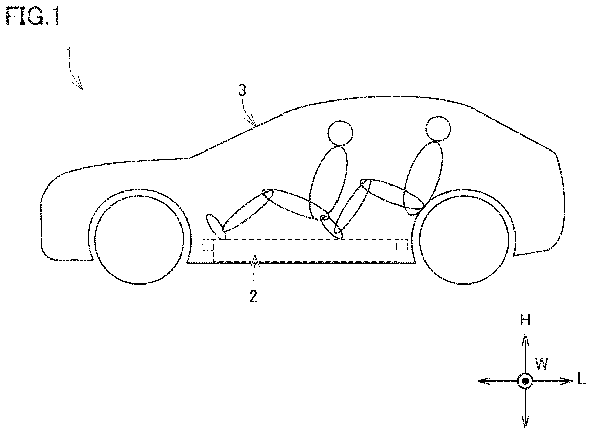

Embodiments of the present disclosure will be described with reference to Figs. 1 to 10. It should be noted that in the figures referred to below, the same or corresponding members are denoted by the same numerals.

Fig. 1 is a diagram schematically showing a vehicle 1 in which a power storage device 2 is mounted. Vehicle 1 includes a vehicle main body 3, and power storage device 2 is mounted on a bottom portion of vehicle main body 3.

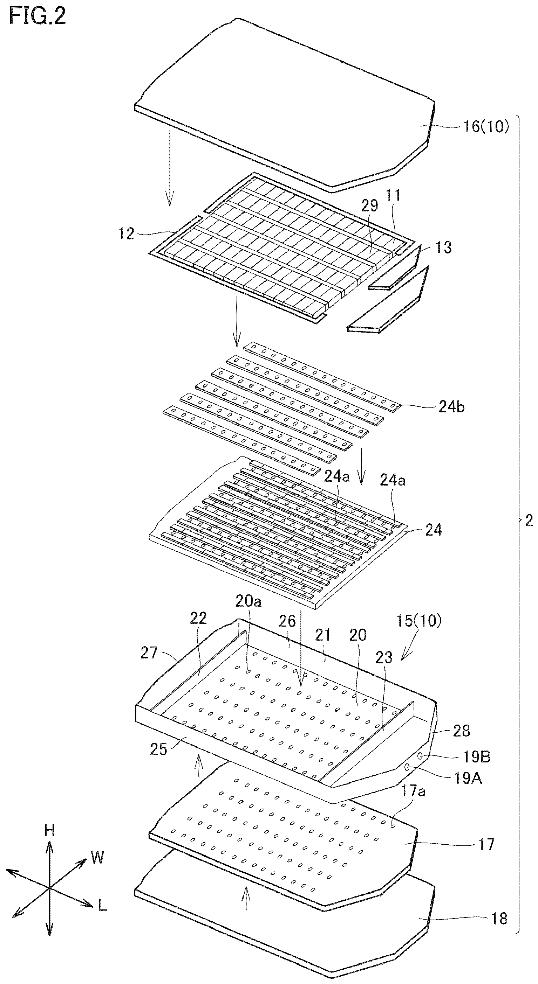

Fig. 2 is an exploded perspective view showing power storage device 2. It should be noted that in Fig. 2, a width direction W is a width direction of power storage device 2 and is also a vehicle width direction of vehicle 1. A forward/rearward direction L is a forward/rearward direction of power storage device 2 and is also a forward/rearward direction of vehicle 1. An upward/downward direction H is an upward/downward direction in the vertical direction.

Power storage device 2 includes an accommodation case 10, a power storage module 11, a cooling device 12, and an electric device 13. Accommodation case 10 includes a lower case 15, an upper case 16, an insulating plate 17, and a shear panel 18.

Lower case 15 is formed to be opened upward, and upper case 16 is provided to close the opening of lower case 15.

Lower case 15 includes a bottom plate 20, a peripheral wall 21, partition walls 22, 23, and an insulating board 24.

Bottom plate 20 is formed to have a plate shape. Peripheral wall 21 is formed along an outer peripheral edge portion of bottom plate 20. Peripheral wall 21 includes a side wall 25, a side wall 26, an end plate 27, and an end plate 28.

Side wall 25 and side wall 26 are disposed side by side in width direction W, and side wall 25 and side wall 26 are formed to extend in forward/rearward direction L.

End plate 27 and end plate 28 are provided with a space being interposed therebetween in forward/rearward direction L, and end plate 27 and end plate 28 are formed to extend in width direction W. End plate 27 connects one end of side wall 25 and one end of side wall 26, and end plate 28 connects the other end of side wall 25 and the other end of side wall 26.

It should be noted that side walls 25, side wall 26, end plate 27, and end plate 28 are provided with below-described fixing portions, and each of the fixing portions is fixed to vehicle main body 3.

Partition wall 22 and partition wall 23 are disposed in a region surrounded by bottom plate 20 and peripheral wall 21. Partition wall 22 is disposed adjacent to end plate 27, and partition wall 22 is formed to extend in width direction W.

Partition wall 23 is disposed with a space being interposed between partition wall 23 and end plate 28 in forward/rearward direction L. End plate 28 is also formed to extend in width direction W.

End plate 28 is provided with breathable films 19A, 19B. Each of breathable film 19A and breathable film 19B is a waterproof gas-permeable film, and each of breathable films 19A, 19B is composed of GORE-TEX or the like, for example.

Insulating board 24 is disposed on a portion of the upper surface of bottom plate 20 between partition wall 22 and partition wall 23. A plurality of openings 24a are formed in insulating board 24. Insulating board 24 is provided with insulating protection bodies 24b that close openings 24a.

Insulating plate 17 is fixed to the lower surface of bottom plate 20, and a plurality of openings 17a are also formed in insulating plate 17.

A plurality of openings 20a are also formed in bottom plate 20. Openings 24a, openings 20a, and openings 17a are arranged side by side in the upward/downward direction.

Shear panel 18 is disposed below insulating plate 17, and an outer peripheral edge portion of shear panel 18 is fixed to the lower surface of bottom plate 20. Moreover, shear panel 18 is formed to cover insulating plate 17 and the lower surface of bottom plate 20.

Power storage module 11 is disposed on the upper surface of insulating board 24. Electric device 13 is disposed between partition wall 23 and end plate 28.

Power storage module 11 includes a plurality of power storage cells 29. The plurality of power storage cells 29 are arranged at intervals in forward/rearward direction L and at intervals in width direction W.

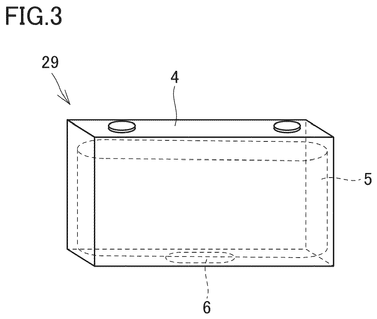

Fig. 3 is a perspective view showing each of power storage cells 29. Power storage cell 29 includes a cell case 4 and an electrode assembly 5 accommodated in cell case 4. Cell case 4 includes a bottom plate, and a smoke-discharge valve 6 is formed in the bottom plate of cell case 4. Each power storage cell 29 is disposed such that smoke-discharge valve 6 is located above opening 24a of insulating board 24 shown in Fig. 2.

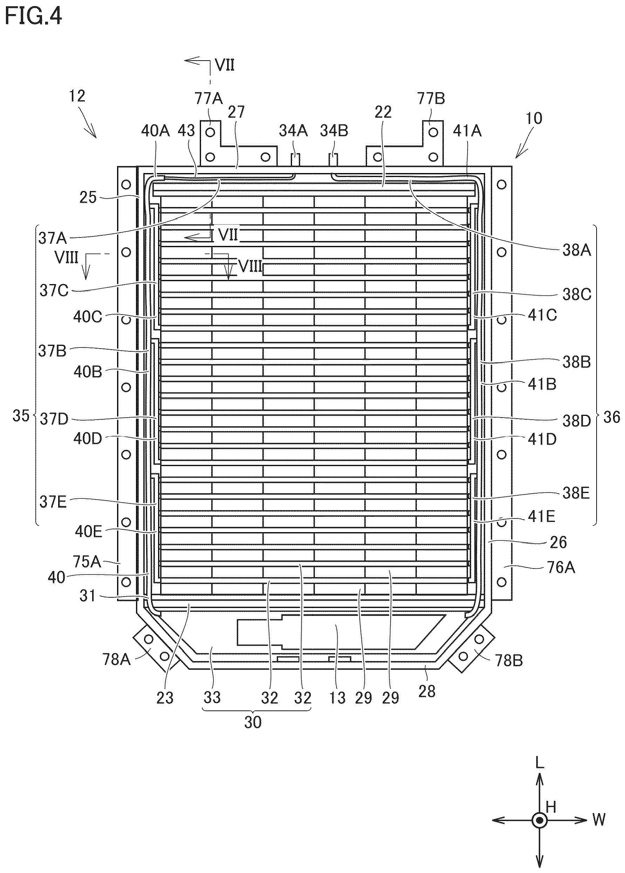

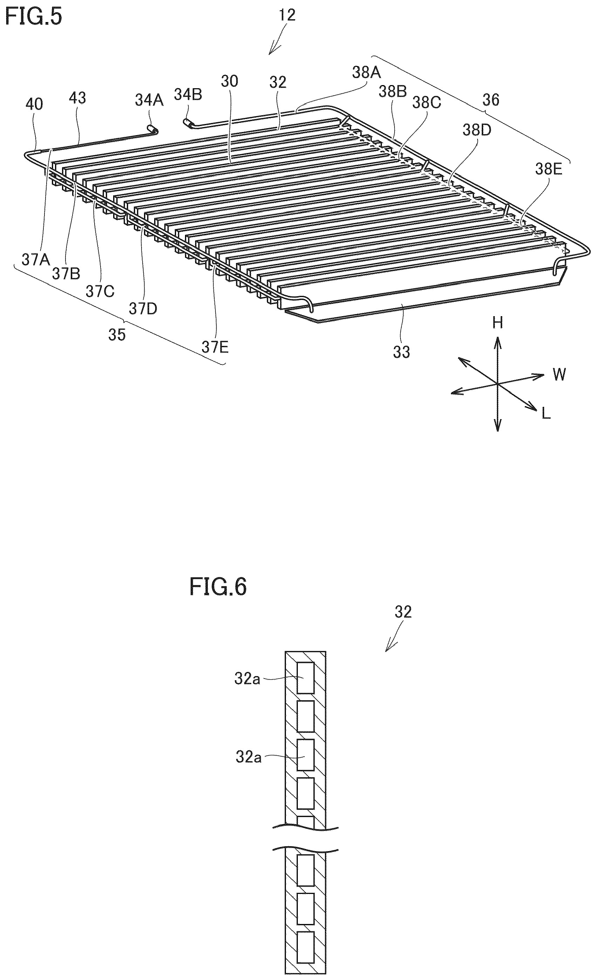

Fig. 4 is a plan view showing cooling device 12 and the like, and Fig. 5 is a perspective view showing cooling device 12. It should be noted that in Fig. 5, power storage cells 29 and the like are not shown.

Referring to Figs. 4 and 5, cooling device 12 includes a heat exchanger 30, a coolant pipe 31, and a heat insulating member 40. Heat exchanger 30 includes a plurality of heat exchange plates 32 and a heat exchange plate 33.

The plurality of heat exchange plates 32 are disposed at intervals in forward/rearward direction L. Each heat exchange plate 32 is disposed so as to extend in width direction W.

The plurality of power storage cells 29 arranged side by side in width direction W are disposed between heat exchange plates 32 adjacent to each other in forward/rearward direction L. It should be noted that Fig. 6 is a cross sectional view showing heat exchange plate 32. As shown in Fig. 6, a plurality of coolant passages 32a are formed in heat exchange plate 32 at intervals in upward/downward direction H.

Returning to Figs. 4 and 5, coolant pipe 31 is disposed in accommodation case 10, and coolant pipe 31 includes a supply pipe 35 and a discharge pipe 36. Coolant pipe 31 includes supply pipe 35 and discharge pipe 36.

Supply pipe 35 is connected to a supply portion 34A, and supply portion 34A is inserted into an insertion hole formed in end plate 27 and is fixed to end plate 27.

Supply pipe 35 includes a main supply pipe 37A, a main supply pipe 37B, and branch pipes 37C, 37D, 37E.

Main supply pipe 37A is disposed between partition wall 22 and end plate 27 so as to extend in width direction W, and main supply pipe 37A is formed to extend toward side wall 25.

Main supply pipe 37B is connected to an end portion of main supply pipe 37A, and is formed to extend in forward/rearward direction L along side wall 25.

Each of branch pipes 37C, 37D, 37E is disposed below main supply pipe 37B and is connected to main supply pipe 37B. Branch pipes 37C, 37D, 37E are disposed at intervals in forward/rearward direction L.

It should be noted that connection portions between main supply pipe 37B and branch pipes 37C, 37D, 37E are provided at intervals in forward/rearward direction L.

The plurality of heat exchange plates 32 disposed at intervals in forward/rearward direction L are connected to branch pipe 37C. Similarly, the plurality of heat exchange plates 32 disposed at intervals in forward/rearward direction L are also connected to branch pipes 37D, 37E.

Heat exchange plate 33 is connected to an end portion of main supply pipe 37B on the end plate 28 side. Heat exchange plate 33 is disposed on a portion of the upper surface of bottom plate 20 between partition wall 23 and end plate 28. It should be noted that the insulating board is disposed between heat exchange plate 33 and bottom plate 20. Electric device 13 is disposed on the upper surface of heat exchange plate 33. Electric device 13 includes, for example, a battery ECU, a junction box, and the like.

Discharge pipe 36 includes a main discharge pipe 38A, a main discharge pipe 38B, and branch pipes 38C, 38D, 38E.

Discharge pipe 36 is connected to a discharge portion 34B, and discharge portion 34B is inserted into an insertion hole formed in end plate 27 and fixed to end plate 27. Insertion hole 39A and insertion hole 39B are formed with a space being interposed therebetween in width direction W.

Main discharge pipe 38A is disposed between partition wall 22 and end plate 27, is disposed to extend in width direction W, and is formed to extend toward side wall 26.

Main discharge pipe 38B is connected to an end portion of main discharge pipe 38A, and is formed to extend along side wall 26.

Branch pipes 38C, 38D, 38E are disposed below main supply pipe 38B, and are also connected to main supply pipe 37B. Branch pipes 38C, 38D, 38E are disposed at intervals in forward/rearward direction L.

The plurality of heat exchange plates 32 disposed at intervals in forward/rearward direction L are connected to branch pipe 38C. Similarly, the plurality of heat exchange plates 32 disposed at intervals in forward/rearward direction L are also connected to branch pipes 38D, 38E. Heat exchange plate 33 is connected to an end portion of main supply pipe 38B on the end plate 28 side.

Heat insulating member 40 includes heat insulating members 40A, 40B, 40C, 40D, 40E, a heat insulating member 41A, and heat insulating members 41B, 41C, 41D, 41E.

Heat insulating member 40A covers a portion of main supply pipe 37A. On the other hand, a portion of main supply pipe 37A is exposed from heat insulating member 40A.

Therefore, an exposed portion (second portion) 43, which is exposed in the accommodation case 10, is formed at main supply pipe 37A.

It should be noted that exposed portion 43 is formed to extend in width direction W from a connection portion of main supply pipe 37A connected to supply portion 34A. Exposed portion 43 is formed to reach the side of connection portion connected to main supply pipe 37B with respect to the center of main supply pipe 37A in width direction W.

Heat insulating member 40A is formed to cover main supply pipe 37A at the connection portion between main supply pipe 37A and main supply pipe 37B.

Heat insulating member 40B covers main supply pipe 37B. Similarly, heat insulating members 40C, 40D, 40E cover branch pipes 37C, 37D, 37E. Heat insulating members 41A, 41B cover main discharge pipes 38A, 38B, and heat insulating members 41C, 41D, 41E cover branch pipes 38C, 38D, 38E. It should be noted that in the present embodiment, a portion of coolant pipe 31 at which each of heat insulating members 40A, 40B is provided corresponds to the "first portion". That is, when a coolant C flows through coolant pipe 31, exposed portion 43 cools surrounding air more greatly than the portion of coolant pipe 31 at which each of heat insulating members 40A, 40B is provided.

It should be noted that as shown in Fig. 4, a fixing portion 75A is formed on the outer surface of side wall 25, and similarly, a fixing portion 76A is formed on the outer surface of side wall 26.

Fixing portions 77A, 77B are formed on the outer surface of end plate 27, and fixing portions 78A, 78B are formed on the outer surface of end plate 28.

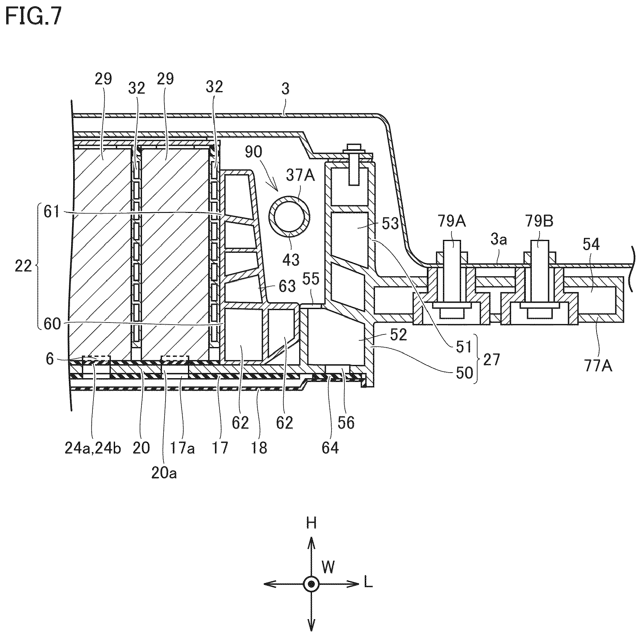

Fig. 7 is a cross sectional view along a line VII-VII in Fig. 4. End plate 27 is formed to extend upward from the outer peripheral edge portion of bottom plate 20.

Insulating plate 17 is fixed to the lower surface of bottom plate 20, and the outer peripheral edge portion of shear panel 18 is fixed to the lower surface of bottom plate 20. Further, a sealing member 64 is disposed between the outer peripheral edge portion of shear panel 18 and the lower surface of bottom plate 20.

End plate 27 includes a base portion 50 and a wall main body 51, and a fixing portion 77A is formed on an outer surface of end plate 27.

Base portion 50 is formed on the upper surface of bottom plate 20. Wall main body 51 is formed to extend upward from base portion 50.

Base portion 50 is formed to protrude to the power storage cell 29 side with respect to wall main body 51. A hollow portion 52 is formed in base portion 50, and a plurality of hollow portions 53 are also formed in wall main body 51. It should be noted that the plurality of hollow portions 53 are formed side by side in upward/downward direction H. A hollow portion 54 is also formed in fixing portion 77A.

Fixing portion 77A is fixed to vehicle main body 3 by fastening members 79A, 79B. For example, vehicle main body 3 includes side sills disposed at intervals in width direction W, a cross member 3a that connects the side sills, and a floor panel, and fixing portion 77A is fixed to cross member 3a. It should be noted that fixing portion 77A may be fixed to the floor panel.

Partition wall 22 includes a base portion 60 and a wall main body 61. Base portion 60 is formed to protrude to the end plate 27 side with respect to wall main body 61. It should be noted that a side surface of partition wall 22 on the power storage cell 29 side is formed to have a flat surface shape.

A plurality of hollow portions 62 are formed in base portion 60. Hollow portions 62 are arranged side by side in forward/rearward direction L. A plurality of hollow portions 63 are formed in wall main body 61. Hollow portions 63 are arranged side by side in upward/downward direction H.

Further, base portion 60 of partition wall 22 and base portion 50 of end plate 27 are disposed in contact with each other. Therefore, a recess 90 is formed by partition wall 22 and end plate 27, and main supply pipe 37A is disposed in recess 90.

In the cross section shown in Fig. 7, main supply pipe 37A is not covered with heat insulating member 40A. That is, Fig. 7 illustrates exposed portion 43 of main supply pipe 37A. As shown in Fig. 7, exposed portion 43 is exposed in accommodation case 10. Further, exposed portion 43 is disposed in recess 90.

Further, main supply pipe 37A is disposed above base portion 60 and base portion 50. An opening 55 is formed in base portion 50. It should be noted that main supply pipe 37A is disposed above opening 55.

Opening 55 communicates with hollow portion 52. Hollow portion 52 is formed to extend in width direction W. A plurality of openings 55 may be formed at intervals in width direction W, or opening 55 may be formed to be long in width direction W.

It should be noted that recess 90 is formed to extend in width direction W, and opening 55 is formed at a portion located at the bottom portion of recess 90.

A discharge port 56 is formed in the bottom surface of base portion 50. Discharge port 56 communicates with hollow portion 52. An opening of discharge port 56 formed in the lower surface of base portion 50 is closed by sealing member 64.

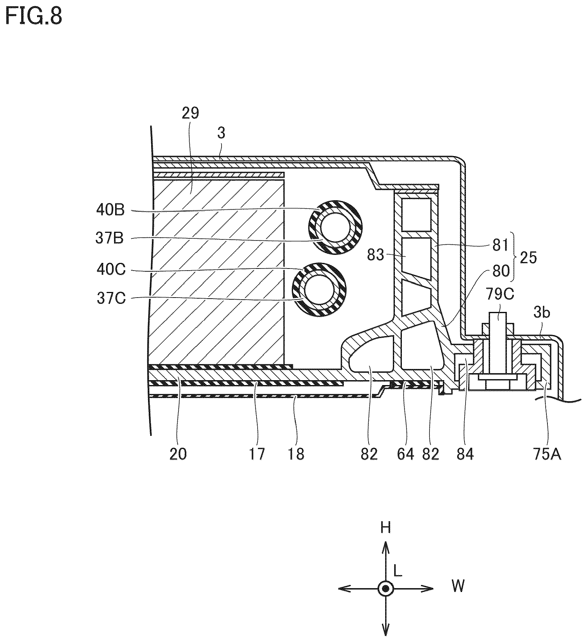

Fig. 8 is a cross sectional view along a line VIII-VIII in Fig. 4.

Side wall 25 includes a base portion 80 formed on the upper surface of bottom plate 20 and a wall main body 81 extending upward from base portion 80.

Base portion 80 is formed to protrude to the power storage cell 29 side with respect to wall main body 81. A plurality of hollow portions 82 are formed in base portion 80, and a plurality of hollow portions 83 are also formed in wall main body 81. It should be noted that the plurality of hollow portions 82 are formed side by side in width direction W, and the plurality of hollow portions 83 are formed side by side in upward/downward direction H.

Fixing portion 75A is formed to project from the outer surface of side wall 25 in width direction W, and fixing portion 75A is fixed to side sill 3b of vehicle main body 3 by a fastening member 79C. It should be noted that a hollow portion 84 is also formed in fixing portion 75A.

It should be noted that in Fig. 8, main supply pipe 37B and branch pipe 37C are shown. As shown in Fig. 8, the outer surface of main supply pipe 37B is covered with heat insulating member 40B. Moreover, branch pipe 37C is also covered with heat insulating member 40C.

Power storage device 2 configured as described above will be described.

In power storage device 2 configured as described above, when internal pressure in accommodation case 10 is increased, gas in accommodation case 10 is exhausted to the outside through breathable films 19A, 19B. On the other hand, when the internal pressure in accommodation case 10 is decreased, gas outside accommodation case 10 enters accommodation case 10 through breathable films 19A, 19B. On this occasion, water vapor also enters accommodation case 10.

When cooling device 12 is driven, a temperature in accommodation case 10 is decreased. When the temperature in accommodation case 10 becomes low, water vapor in accommodation case 10 undergoes dew condensation.

Here, coolant pipe 31 of cooling device 12 includes exposed portion 43 at which heat insulating member 40 is not provided.

Exposed portion 43 is exposed in accommodation case 10, and a temperature around exposed portion 43 is likely to be low. Specifically, exposed portion 43 cools surrounding air more greatly than a portion of coolant pipe 31 at which heat insulating members 40A, 40B are provided. As a result, dew condensation water is facilitated to be generated on the surface of exposed portion 43, thereby suppressing the dew condensation water from being adhered to, for example, power storage cell 29 or the like.

By suppressing the dew condensation water from being adhered to power storage cell 29, it is possible to suppress occurrence of a trouble such as short-circuiting of power storage cell 29, for example.

In Fig. 2, when cooling power storage module 11, coolant C is supplied to cooling device 12.

In Fig. 4, coolant C is supplied from supply portion 34A to supply pipe 35. Specifically, coolant C is supplied to main supply pipe 37A. Thereafter, coolant C enters main supply pipe 37B. A part of coolant C having entered main supply pipe 37A enters branch pipes 37C, 37D, 37E.

Coolant C having entered branch pipes 37C, 37D, 37E is supplied to the plurality of heat exchange plates 32 connected to branch pipes 37C, 37D, 37E.

By supplying coolant C to the plurality of heat exchange plates 32, power storage cells 29 disposed between heat exchange plates 32 are cooled. On the other hand, coolant C flowing through heat exchange plate 32 is warmed by heat from power storage cells 29.

The plurality of heat exchange plates 32 are connected to branch pipes 38C, 38D, 38E, and coolant C warmed in heat exchange plates 32 enters branch pipes 38C, 38D, 38E.

Branch pipes 38C, 38D, 38E are connected to main discharge pipe 38A, and coolant C passes through main discharge pipe 38A and is discharged from discharge portion 34B to the outside of accommodation case 10. It should be noted that discharge portion 34B is connected to a radiator or the like (not shown), and coolant C is cooled by the radiator or the like. Then, cooled coolant C is supplied to supply portion 34A again.

Further, heat exchange plate 33 is connected to an end portion of main discharge pipe 38A, and electric device 13 is cooled by heat exchange plate 33. Heat exchange plate 33 is connected to an end portion of main discharge pipe 38B, and coolant C enters main discharge pipe 38B.

Here, in cooling device 12, a region in which the temperature of coolant C is low is main supply pipe 37A. Moreover, by providing exposed portion 43 at main supply pipe 37A as shown in Fig. 7, the surface temperature of exposed portion 43 can become low.

Thus, a large amount of dew condensation water can be generated at exposed portion 43, thereby suppressing the dew condensation water from being adhered to power storage cell 29 or electric device 13.

In Fig. 7, exposed portion 43 is disposed in recess 90 formed by partition wall 22 and end plate 27, and partition wall 22 is disposed between power storage cell 29 and exposed portion 43.

Therefore, when air around exposed portion 43 is cooled, dew condensation water is facilitated to be adhered to the inner surface of recess 90, and is suppressed from being adhered to power storage cell 29 or the like.

Then, the dew condensation water is adhered to the surface of exposed portion 43 and is then dropped to the bottom portion of recess 90, and the dew condensation water adhered to the inner surface of recess 90 is collected at the bottom portion of recess 90.

Opening 55 is formed in the bottom portion of recess 90, and the dew condensation water is discharged from opening 55 into hollow portion 52. Thus, the dew condensation water can be discharged from the space in which power storage cell 29 and electric device 13 are accommodated in accommodation case 10.

Moreover, since opening 55 is located below exposed portion 43, when the dew condensation water adhered to the surface of exposed portion 43 is dropped, the dew condensation water enters opening 55 in a favorable manner and can be discharged to hollow portion 52.

Further, for example, during maintenance of vehicle 1 or the like, discharge port 56 is exposed by removing shear panel 18 and sealing member 64. Thus, the dew condensation water in hollow portion 52 can be discharged to the outside of accommodation case 10.

### (Modification 1)

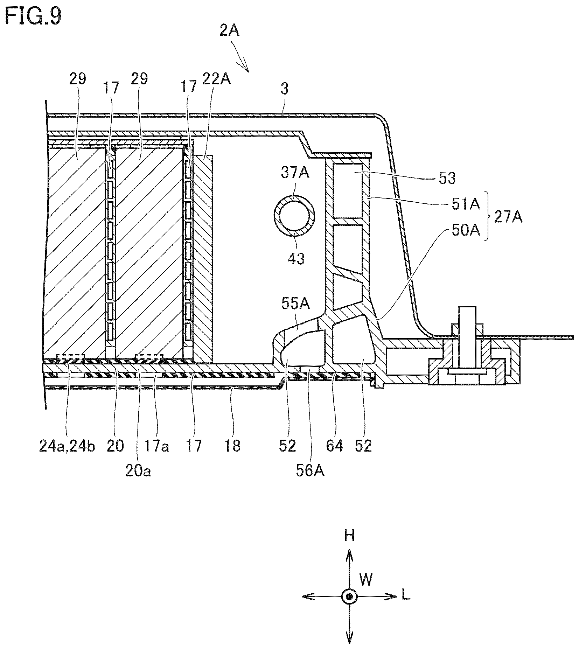

A power storage device 2A according to a modification 1 will be described. It should be noted that configurations other than the shapes of end plate 27 and partition wall 22 in power storage device 2A are the same as those in power storage device 2. Fig. 9 is a cross sectional view showing power storage device 2A.

Power storage device 2A includes an end plate 27A. End plate 27A includes a base portion 50A and a wall main body 51A.

Base portion 50A is formed on the upper surface of bottom plate 20. Wall main body 51A is formed to extend upward from base portion 50A.

Base portion 50A is formed to protrude to the power storage cell 29 side with respect to wall main body 51A. Hollow portion 52 is formed in base portion 50A, and the plurality of hollow portions 53 are also formed in wall main body 51. It should be noted that the plurality of hollow portions 53 are formed side by side in upward/downward direction H.

Upper surface 92 of base portion 50A is inclined downward as it extends away from wall main body 51A in forward/rearward direction L. An opening 55A is formed in the upper surface of base portion 50A. Opening 55A also communicates with hollow portion 52. It should be noted that in power storage device 2A, a partition wall 22A is formed to have a plate shape.

According to power storage device 2A, the dew condensation water adhered to wall main body 51A or the like can be guided from opening 55A to hollow portion 52 via upper surface 92. It should be noted that opening 55A may be formed to be long in width direction W, for example.

### (Modification 2)

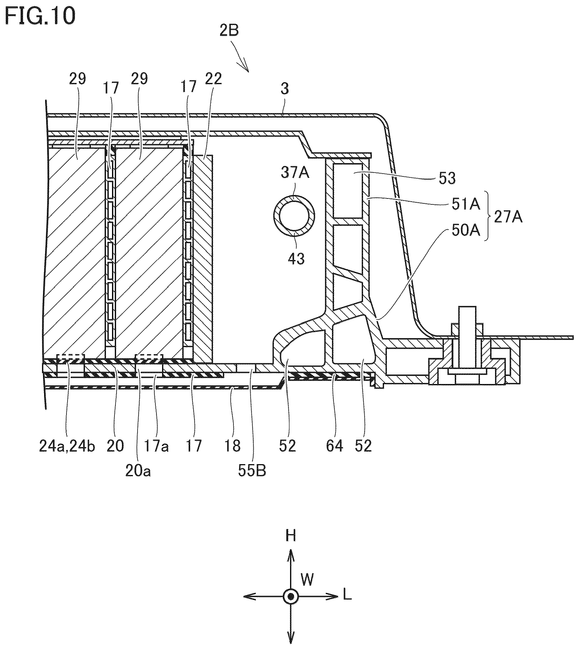

A power storage device 2B according to a modification 2 will be described. Fig. 10 is a cross sectional view showing power storage device 2B. Power storage device 2B is configured in the same manner as power storage device 2A except for the position of the opening.

An opening 55B is formed in bottom plate 20 of power storage device 2B. Opening 55B is formed at a position adjacent to base portion 50A in forward/rearward direction L. Opening 55B is located in the lower surface of bottom plate 20, and shear panel 18 is disposed below opening 55B. Therefore, for example, the dew condensation water adhered to exposed portion 43 is dropped and is guided to opening 55B via upper surface 92, which is an inclined surface. Then, the dew condensation water is discharged from opening 55B to the outside of accommodation case 10.

The embodiments disclosed herein are illustrative and non-restrictive in any respect. The scope of the present disclosure is defined by the terms of the claims, and is intended to include any modifications within the scope and meaning equivalent to the terms of the claims.

## Claims

1. A power storage device comprising:
an accommodation case (10) that accommodates a power storage cell (29);
a heat exchanger (30) disposed in the accommodation case (10); and
a coolant pipe (31) through which a coolant flows, the coolant pipe (31) being disposed in the accommodation case (10), the coolant pipe (31) being connected to the heat exchanger (30), wherein
the coolant pipe (31) includes a first portion and a second portion (43) that cools surrounding air more greatly than the first portion.

2. The power storage device according to claim 1, wherein
the coolant pipe (31) includes
a supply pipe (35) through which the coolant to be supplied to the heat exchanger (30) flows, and
a discharge pipe (36) through which the coolant to be discharged from the heat exchanger (30) flows, and
the second portion (43) is provided at the supply pipe (35).

3. The power storage device according to claim 1, wherein
a heat insulating member (40) is disposed on an outer surface of the first portion, and
an outer surface of the second portion (43) is exposed in the accommodation case (10).

4. The power storage device according to claim 1, wherein
the accommodation case (10) includes a bottom plate (20) and a wall portion (27) formed to extend upward from the bottom plate (20),
the wall portion (27) includes a base portion (50) and a wall main body (51) formed to extend upward from the base portion (50),
the base portion (50) is formed to protrude to the power storage cell (29) side with respect to the wall main body (51),
the coolant pipe (31) is disposed above the base portion (50), and
in the base portion (50), an opening (55) is formed at a portion located below the coolant pipe (31).

5. The power storage device according to claim 4, wherein
the accommodation case (10) includes a partition wall disposed on the power storage cell (29) side with respect to the wall portion (27), and
the second portion (43) is disposed between the partition wall and the wall portion (27).

6. The power storage device according to claim 4, wherein a hollow portion is formed in the wall portion (27), and the opening (55) is formed to communicate with the hollow portion.

7. The power storage device according to claim 6, further comprising a shear panel (18) disposed on a lower surface of the accommodation case (10), wherein
a discharge port (56) communicating with the hollow portion is formed in a lower surface of the wall portion (27), and
the discharge port (56) is closed by the shear panel (18).
